# FASCICULE DE BREVET EUROPEEN

(11) **EP 3 242 786 B1**
(45) Date de publication et mention de la délivrance du brevet: **12.12.2018**
(21) Numéro de dépôt: 16701832.4
(22) Date de dépôt: 06.01.2016
(51) Int. Cl.: B29C 49/58, B29C 49/06, B29C 49/12, B29C 49/36

(54) **UNITÉ D'INJECTION POURVUE D'UN SYSTÈME DE FIXATION MAGNÉTIQUE**
INJEKTIONSEINHEIT MIT MAGNETISCHEM BEFESTIGUNGSSYSTEM
INJECTION UNIT WITH A MAGNETIC ATTACHMENT SYSTEM

(30) Priorité: 07.01.2015 FR 1550078
(43) Date de publication de la demande: 15.11.2017
(73) Titulaire: Sidel Participations, 76930 Octeville-sur-Mer (FR)
(72) Inventeur: LEMAIRE, Cédric, 76930 Octeville-sur-Mer (FR)
(74) Mandataire: Grassin d'Alphonse, Emmanuel Jean Marie
(86) Numéro de dépôt international: PCT/FR2016/050014
(87) Numéro de publication internationale: WO 2016/110644

(56) Documents cités:
- US-A1- 2008 286 402
- US-A1- 2010 252 945
- US-A1- 2013 122 136
- US-B2- 8 192 656

## Description

L'invention a trait à la fabrication des récipients par soufflage ou étirage soufflage à partir d'ébauches (préformes brutes d'injection ou récipients intermédiaires) en matière plastique (tel que polytéréphtalate d'éthylène ou PET).

La fabrication (à cadence industrielle) des récipients par soufflage ou étirage soufflage se déroule ordinairement dans une machine équipée d'une pluralité de postes de formage comprenant chacun un moule muni d'une paroi à l'empreinte du modèle de récipient à former et dans lequel une ébauche préalablement chauffée est introduite, et une unité d'injection par laquelle un fluide sous pression (généralement un gaz, le plus souvent de l'air) est introduit dans l'ébauche pour plaquer celle-ci contre la paroi du moule et ainsi lui conférer la forme du récipient.

Une unité d'injection est notamment connue du document FR 2 918 916 (Sidel Participations - voir également son équivalent américain US 8 192 656). D'autres unités d'injection apparentées sont décrites dans les documents US2010/252945A1, US8192656B2 et US2008/286402A1.

Une unité d'injection comprend en général :
- un bloc d'injection définissant un conduit fluidique et pourvu d'au moins un orifice d'alimentation en fluide, en communication avec le conduit fluidique ;
- un équipage mobile muni d'une tuyère-cloche en communication fluidique avec le conduit, l'équipage mobile étant monté coulissant, par rapport au bloc d'injection, entre une position basse dans laquelle la tuyère-cloche est appliquée de manière étanche contre le moule pour assurer l'étanchéité fluidique entre le conduit fluidique et le moule, et une position de sécurité dans laquelle la tuyère-cloche est écartée du moule pour permettre l'évacuation d'un récipient du moule et l'introduction d'une ébauche dans le moule.

Le déplacement de l'équipage mobile est d'ordinaire réalisé par un système de commande mécanique. On peut ainsi disposer, sur le trajet des postes de formage, un chemin de came qui fait le tour de la machine et sur lequel circule un suiveur de came solidaire de l'équipage mobile pour déplacer celui-ci vers l'une ou l'autre de ses positions.

Mais un tel chemin de came est encombrant. Il impose une adaptation des postes de formage pour éviter tout choc des pièces mobiles contre le chemin de came.

Lorsque le formage des récipients comprend une phase d'étirage réalisée au moyen d'une tige coulissante, l'équipage mobile peut être accouplé à celle-ci pour être entraîné par elle sur au moins une partie de sa course.

Mais toute défaillance dans l'accouplement de l'équipage mobile à la tige d'étirage a pour conséquence de laisser tomber l'équipage mobile dans sa position basse, ce qui empêche l'introduction des préformes et l'évacuation des récipients et nécessite un arrêt d'urgence de la machine. Compte tenu de son inertie, celle-ci ne s'arrête pas immédiatement, et il est difficile d'éviter la casse des éléments de préhension des ébauches (en entrée) et des récipients (en sortie), qui viennent buter contre la tuyère-cloche demeurée en position basse.

Un premier objectif est par conséquent de proposer une solution permettant de fiabiliser l'unité d'injection.

Un deuxième objectif est de proposer une solution permettant de limiter le risque de casse au niveau de la tuyère-cloche lorsqu'une défaillance est à déplorer dans le système de commande du déplacement de l'équipage mobile.

A cet effet, il est proposé, en premier lieu, une unité d'injection pour une machine de fabrication de récipients par soufflage ou étirage soufflage, dans un moule à l'empreinte des récipients, à partir d'ébauches en matière plastique, cette unité d'injection comprenant :
- un bloc d'injection définissant un conduit fluidique et pourvu d'au moins un orifice d'alimentation en fluide, en communication avec le conduit fluidique ;
- un équipage mobile muni d'une tuyère-cloche en communication fluidique avec le conduit, l'équipage mobile étant monté coulissant, par rapport au bloc d'injection, entre une position basse dans laquelle la tuyère-cloche est appliquée de manière étanche contre le moule pour assurer l'étanchéité fluidique entre le conduit fluidique et le moule, et une position de sécurité dans laquelle la tuyère-cloche est écartée du moule pour permettre l'évacuation d'un récipient du moule et l'introduction d'une ébauche dans le moule ;
- un système de fixation magnétique de l'équipage mobile au bloc d'injection, propre à retenir l'équipage mobile en position de sécurité, sous le poids de celui-ci, ce système de fixation magnétique comprenant une butée montée sur le bloc d'injection, et un doigt solidaire de l'équipage mobile et qui, en position de sécurité, vient au contact de la butée;
- l'unité d'injection étant caractérisée en ce que l'équipage mobile comprend un suiveur de came propre à coopérer avec un chemin de came fixe.

De la sorte, l'équipage mobile peut être retenu en position de sécurité même en cas de défaillance mécanique du système de commande du déplacement de l'équipage mobile (généralement de manière solidaire d'une tige d'étirage des ébauches). Il est donc possible, dans une phase de transition temporaire, d'assurer l'introduction des ébauches et l'évacuation des récipients sans risque de casse matérielle.

Diverses caractéristiques supplémentaires peuvent être prévues, seules ou en combinaison :
- la butée intègre un aimant ;
- le doigt est réalisé dans un matériau ferromagnétique ;
- la butée est montée coulissante par rapport au bloc d'injection, à partir d'une position de fin de course basse qui, lorsque le doigt est au contact de la butée, correspond à la position de sécurité de l'équipage mobile ;
- le bloc d'injection est pourvu d'un alésage, et l'équipage mobile comprend une tige solidaire de la tuyère-cloche et montée de manière coulissante dans l'alésage pour assurer, conjointement avec la tuyère-cloche, le guidage en translation de l'équipage mobile par rapport au bloc d'injection ;
- le doigt est fixé à une extrémité inférieure de la tige.

Il est proposé, en deuxième lieu, un poste de formage de récipients à partir d'ébauches en matière plastique, qui comprend un moule à l'empreinte des récipients et une unité d'injection telle que décrite ci-dessus, surplombant le moule.

Il est proposé, en troisième lieu, une machine de fabrication de récipients à partir d'ébauches en matière plastique, équipée d'une pluralité de postes de formage tels qu'évoqués ci-dessus.

D'autres objets et avantages de l'invention apparaîtront à la lumière de la description d'un mode de réalisation, faite ci-après en référence aux dessins annexés dans lesquels :
- la figure 1 est une vue en perspective d'un poste de formage de récipients, incluant une unité d'injection montrée dans une position basse de son équipage mobile, avec, en médaillon, un détail à échelle agrandie centré sur le système de fixation magnétique ;
- la figure 2 est une vue en coupe du poste de formage de la figure 1, suivant le plan de coupe II-II ;
- la figure 3 est une vue d'un détail, à échelle agrandie, du poste de formage de la figure 2, suivant l'encart III ;
- la figure 4 est une vue similaire à la figure 1, montrant l'unité de formage dans une position haute de l'équipage mobile, avec, en médaillon, un détail à échelle agrandie centré sur le système de fixation magnétique ;
- la figure 5 est une vue en coupe du poste de formage de la figure 4, suivant le plan de coupe V-V ;
- la figure 6 est une vue similaire aux figures 1 et 4, montrant l'unité de formage dans une position de sécurité de l'équipage mobile, avec, en médaillon, un détail à échelle agrandie centrée sur le système de fixation magnétique ;
- la figure 7 est une vue en coupe du poste de formage de la figure 5, suivant le plan de coupe VII-VII.

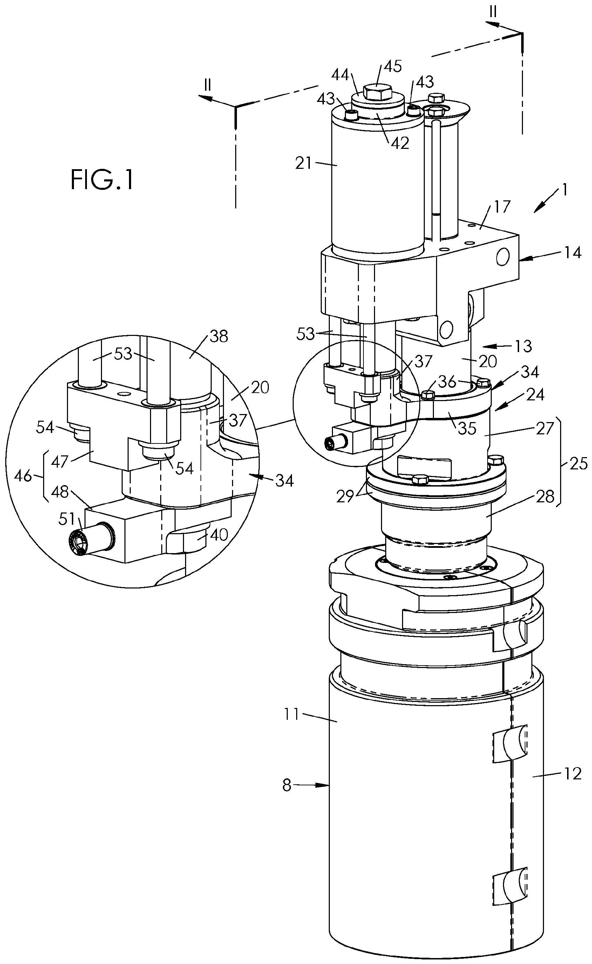

Sur la figure 1 est représenté un poste **1** de formage de récipients **2** par soufflage ou étirage soufflage à partir d'ébauches **3** en matière plastique tel que PET (polytéréphtalate d'éthylène).

Dans ce qui suit, on suppose que les ébauches **3** sont des préformes brutes d'injection, mais il pourrait également s'agir de récipients intermédiaires obtenu à partir de préformes ayant subi une ou plusieurs opérations de soufflage ou d'étirage soufflage et destinés à subir une ou plusieurs opérations supplémentaires de soufflage ou d'étirage soufflage.

Chaque préforme **3** comprend un corps **4** sensiblement cylindrique, un col **5** qui s'étend dans le prolongement du corps **4** à partir d'une extrémité supérieure de celui-ci, dont le col **5** est séparé par une collerette **6,** et un fond **7** hémisphérique qui s'étend dans le prolongement du corps **4** à partir d'une extrémité inférieure, à l'opposé du col **5.**

Le poste **1** de formage est destiné à équiper, avec une pluralité de postes **1** de formage identiques, une machine de fabrication de récipients à cadence élevée (plusieurs dizaines de milliers de récipients par heure). Une telle machine comprend généralement un carrousel tournant à une périphérie duquel sont montés les postes **1** de formage.

Le poste **1** de formage comprend un moule **8** muni d'une paroi **9** définissant une cavité **10** à l'empreinte d'un modèle de récipient à former, de forme globalement cylindrique de révolution autour d'un axe **X** principal vertical. Dans l'exemple illustré, le moule **8** est du type portefeuille et comprend deux demi-moules **11, 12** définissant chacun une demi-empreinte du récipient à former et montés articulés l'un par rapport à l'autre entre une position ouverte dans laquelle une préforme **3** peut être introduite latéralement dans le moule **8** au moyen d'un dispositif de préhension (tel qu'une pince en forme de fourchette), et dans laquelle un récipient **2** formé peut être évacué latéralement au moyen d'un dispositif de préhension similaire, et une position fermée dans laquelle la préforme **3** est maintenue dans le moule **8** pour y être transformée en récipient par soufflage ou étirage soufflage.

Le poste **1** de formage comprend également une unité **13** d'injection surplombant le moule **8** et qui a pour fonction d'introduire, dans la préforme **3** préalablement chauffée et suspendue dans le moule **8** par sa collerette **6,** un fluide sous pression - notamment un gaz tel que de l'air - pour plaquer la matière contre la paroi **9** du moule **8** et lui conférer ainsi l'empreinte du récipient **2.**

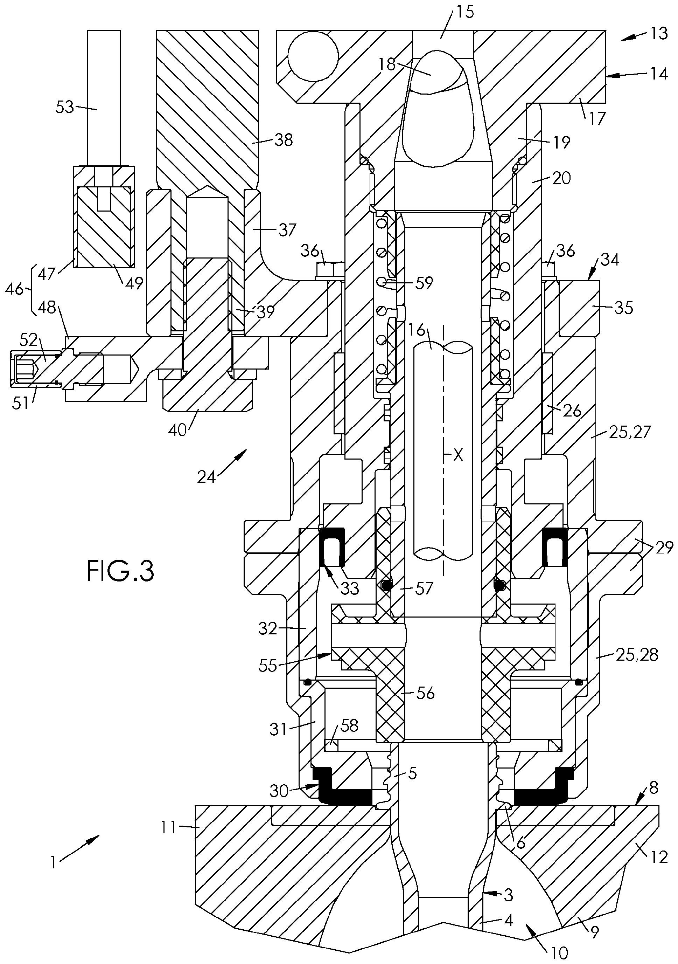

L'unité **13** d'injection comprend, en premier lieu, un bloc **14** d'injection, fixé sur le carrousel à l'aplomb du moule **8** et définissant un conduit **15** fluidique colinéaire à l'axe **X** principal. Le conduit **15** fluidique a pour fonction de canaliser le fluide injecté dans la préforme **3** pour former le récipient **2,** et pour permettre le libre coulissement d'une tige **16** d'étirage (partiellement représentée sur la figure 3).

Selon un mode de réalisation illustré sur les dessins, le bloc **14** d'injection comprend un boîtier **17** réalisé dans un matériau rigide (notamment dans un métal ou dans un plastique à hautes performances). Ce boîtier **17** est pourvu d'au moins un orifice **18** d'alimentation relié, par un conduit non représenté, à une (ou plusieurs) source(s) de fluide sous pression et débouchant dans le conduit **15** fluidique pour y injecter le fluide en provenance de la (ou des) source(s). Selon un mode particulier de réalisation, l'orifice **18** peut être placé en communication fluidique alternativement, d'une part, via une électrovanne, avec une source de fluide à une pression de présoufflage (par ex. comprise entre 5 bars et 15 bars) et, d'autre part, via une autre électrovanne, avec une source de fluide à une pression de soufflage (par ex. comprise entre 20 bars et 40 bars) supérieure à la pression de présoufflage.

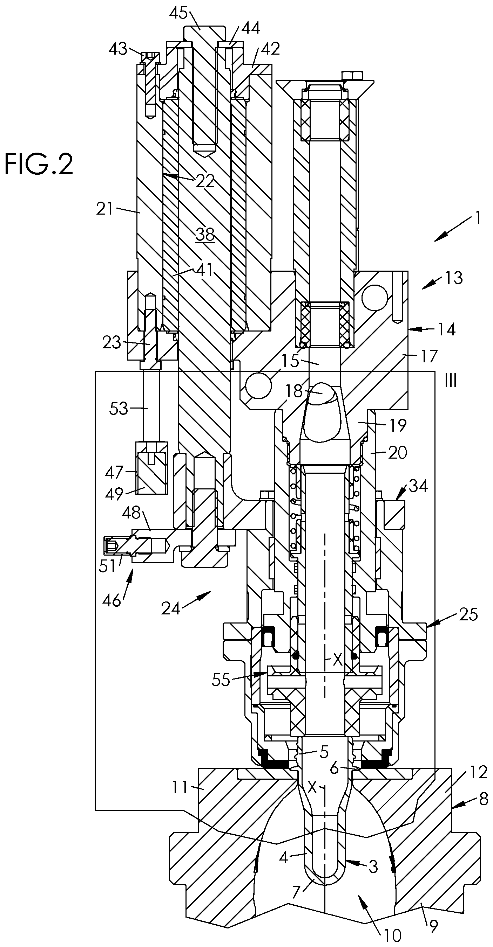

Comme on le voit bien sur les figures 2 et 3, le bloc **14** d'injection comprend un embout **19** de raccordement dans lequel se prolonge le conduit **15** fluidique, et une tubulure **20** creuse fixée de manière étanche - par exemple par vissage - sur l'embout **19** de raccordement.

Le bloc **14** d'injection comprend en outre une fusée **21** fixée sur le boîtier **17,** cette fusée **21** étant pourvue d'un alésage **22** décalé de l'axe **X** principal mais parallèle à celui-ci. Selon un mode de réalisation illustré sur les figures, et plus particulièrement visible sur la figure 2, la fixation de la fusée **21** sur le boîtier est réalisée au moyen de vis **23.**

L'unité **13** d'injection comprend, en deuxième lieu, un équipage **24** mobile muni d'une tuyère-cloche **25** creuse en communication fluidique avec le conduit **15.** Dans l'exemple illustré, la tuyère-cloche **25** est montée en translation sur la tubulure **20.** Pour faciliter le guidage de la tuyère-cloche **25** par rapport à la tubulure **20,** une bague **26** d'usure réalisée dans un matériau à faible coefficient de friction (par ex. en laiton ou en PTFE) est interposée entre la tuyère-cloche **25** et la tubulure **20.**

Selon un mode de réalisation illustré sur les figures, et plus particulièrement visible sur la figure 3, la tuyère-cloche **25** est réalisée en deux parties assemblées, à savoir une partie **27** supérieure et une partie **28** inférieure munies de collerettes **29** par lesquelles les parties **27, 28** sont fixées mutuellement, par exemple par vissage. La partie **28** inférieure porte, à une extrémité inférieure, un joint **30** d'étanchéité plat fermement maintenu au moyen d'une douille **31** et d'une entretoise **32** superposées.

L'étanchéité entre la tuyère-cloche **25** et la tubulure **20** est assurée au moyen d'un joint **33** d'étanchéité dynamique, typiquement un joint à lèvre interposé entre une extrémité de la tubulure **20** et l'entretoise **32.**

L'équipage **24** mobile est pourvu d'une monture **34** définissant un collier **35** entourant la tubulure **20** et sur lequel est fixée la tuyère-cloche **25** par sa partie **27** supérieure, par exemple au moyen de vis **36.** Comme on le voit sur les figures, et plus précisément sur la figure 3, la monture **34** comporte un oeilleton **37** qui fait saillie, latéralement, du collier **35.**

L'équipage **24** mobile est en outre pourvu d'une tige **38** de guidage solidaire de la monture **34.** Plus précisément, la tige **38** de guidage présente une extrémité **39** inférieure de diamètre réduit, emmanchée dans l'oeilleton **37** et fixée à la monture **34** par l'intermédiaire d'une vis **40.**

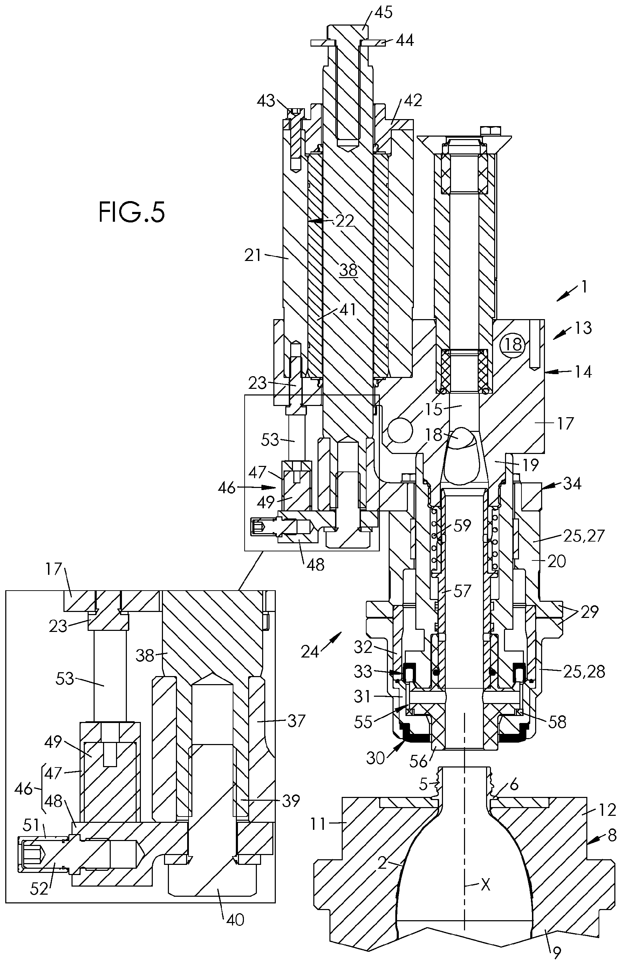

Comme on le voit bien sur les figures 2 et 5, la tige **38** de guidage est montée coulissante par rapport à la fusée **21** en étant emmanchée dans l'alésage **22** avec interposition d'une douille **41** à billes destinée à faciliter le coulissement de la tige **38** dans la fusée **21.**

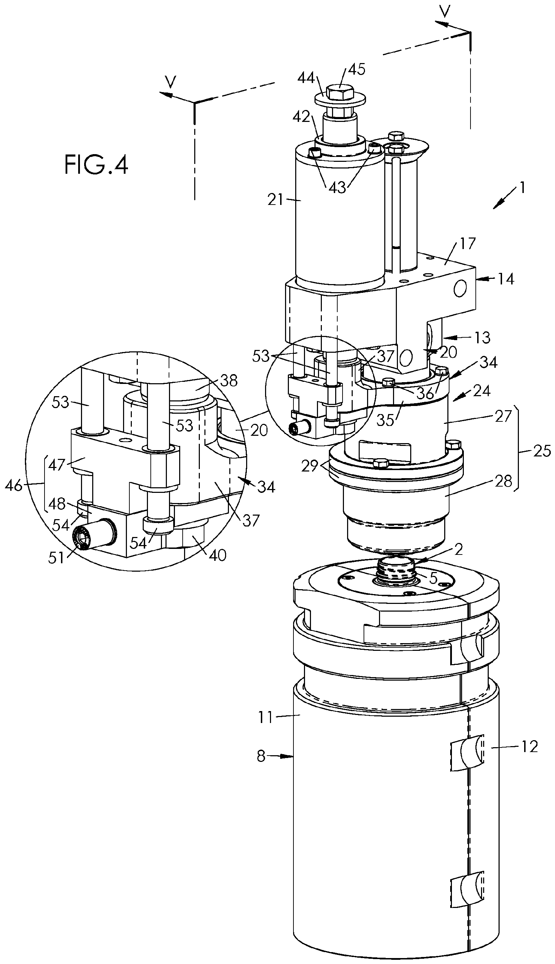

De la sorte, l'équipage **24** mobile est monté coulissant, par rapport au bloc **14** d'injection, entre :
- une position basse (figures 1, 2, 3) dans laquelle la tuyère-cloche **25** est appliquée de manière étanche par son joint **30** contre le moule **8** pour assurer l'étanchéité fluidique entre le conduit **15** fluidique et le moule **8** et ainsi permettre l'injection du fluide dans la préforme **3,** et
- une position haute (figures 4, 5) dans laquelle la tuyère-cloche **25** est écartée du moule **8** pour permettre l'évacuation d'un récipient **2** du moule et l'introduction dans celui-ci d'une nouvelle préforme **3.**

Le guidage en translation de l'équipage **24** mobile est assuré conjointement par la tuyère-cloche **25** sur la tubulure **20** (via la bague **26** d'usure) et par la tige **38** dans l'alésage **22** (via la douille **41** à billes).

Comme on le voit sur la figure 2, la douille **41** à billes est maintenue dans l'alésage **22** au moyen d'une bride **42** fixée à une extrémité supérieure de la fusée, par exemple par des vis **43.**

Comme on le voit encore sur la figure 2, une rondelle **44** est fixée, au moyen d'une vis **45,** à une extrémité supérieure de la tige **38** de guidage. En position basse de la tuyère-cloche **25,** la rondelle **44** est appliquée contre la bride **42** qui forme ainsi une butée de fin de course pour l'équipage **24** mobile.

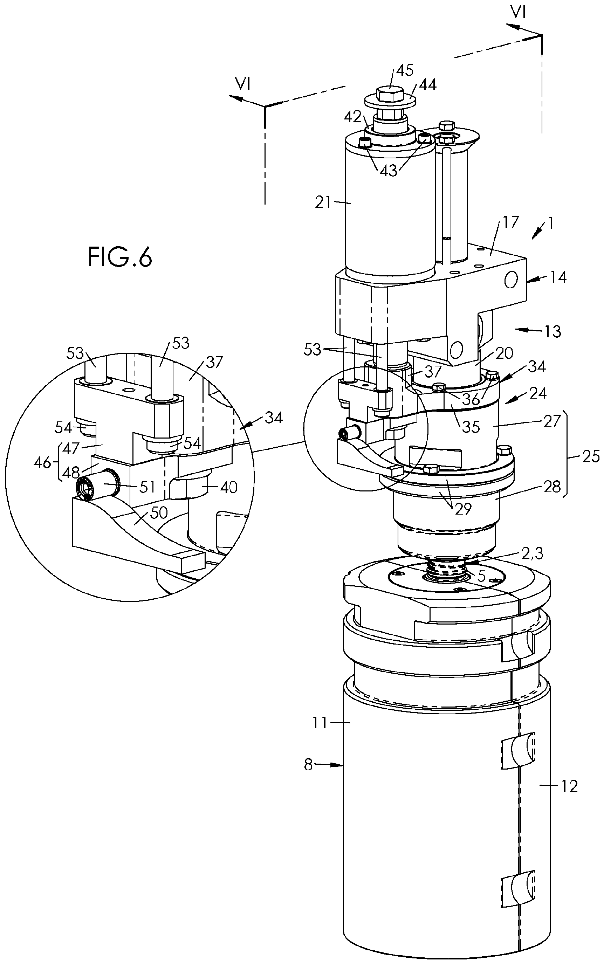

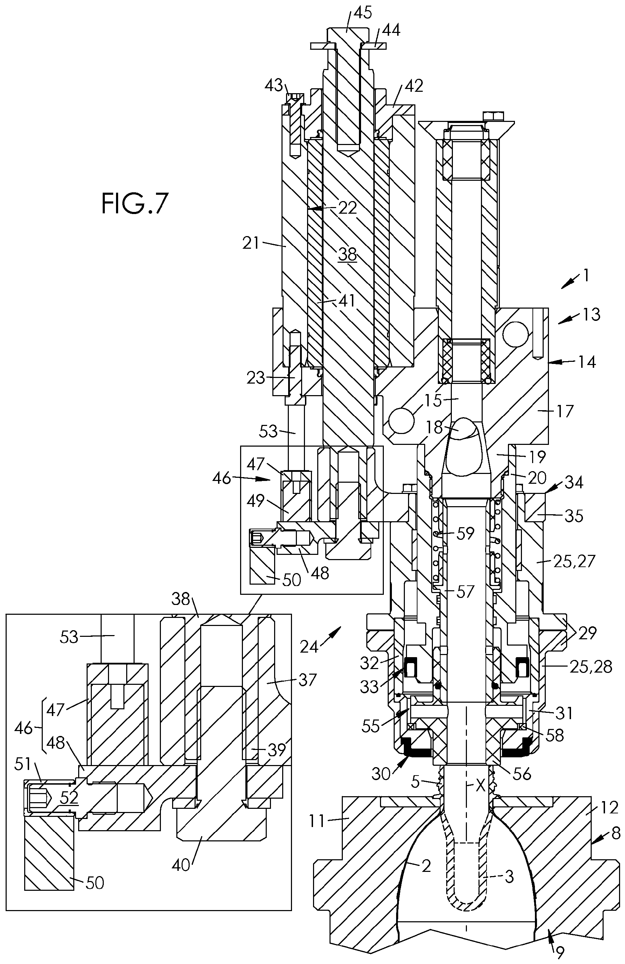

L'unité **13** d'injection comprend, en troisième lieu, un système **46** de fixation magnétique de l'équipage **24** mobile au bloc **14** d'injection, propre à retenir l'équipage **24** mobile, sous le poids de celui-ci, dans une position de sécurité (figures 6, 7) intermédiaire entre la position basse et la position haute et dans laquelle la tuyère-cloche **25** est suffisamment écartée du moule **8** pour permettre l'évacuation d'un récipient **2** du moule et l'introduction, dans celui-ci, d'une préforme **3.**

Le système **46** de fixation magnétique a pour fonction d'assurer le maintien de la tuyère-cloche **25** à distance du moule **8** dans une situation d'urgence où la commande normale de déplacement de l'équipage **24** mobile est défaillante (par ex. lorsque l'équipage **24** mobile est désaccouplé de la tige **16** d'étirage), afin d'assurer l'introduction des préformes **3** et l'évacuation des récipients **2** en limitant (voire en annulant) le risque de casse matérielle des éléments de préhension des préformes **3** et des récipients **2** lors de chocs contre la tuyère-cloche **25** qui serait sinon accidentellement demeurée en position basse pendant l'ouverture du moule **8.**

Selon un mode de réalisation illustré sur les figures, le système **46** de fixation magnétique comprend une butée **47** montée sur le bloc **14** d'injection, et un doigt **48** solidaire de l'équipage **24** mobile et qui, en position de sécurité, vient au contact de la butée **47** contre laquelle il est maintenu par effet magnétique, soutenant le poids de l'ensemble de l'équipage **24** mobile. Le doigt **48** peut être fixé à l'extrémité 39 inférieure de la tige **38** de guidage, par exemple au moyen de la vis **40** qui assure par ailleurs la fixation de la tige **38** sur la monture **34.**

Dans l'exemple illustré sur les figures, la butée **47** intègre un aimant **49,** de préférence réalisé dans un alliage de terre rare tel que néodyme-fer-bore, qui présente l'avantage de produire un champ magnétique puissant tout en offrant des dimensions réduites. En l'espèce, un aimant **49** cylindrique d'un diamètre de l'ordre de 10 mm à 15 mm et d'une épaisseur de 15 mm à 25 mm suffit à retenir en position de verrouillage l'équipage **24** mobile, dont le poids est compris entre 40 N environ et 50 N environ.

Quant au doigt **48,** il est réalisé dans un matériau ferromagnétique, par ex. en fer doux ou en acier doux.

On peut inverser la configuration, en réalisant la butée **47** dans un matériau ferromagnétique (tel que fer doux ou acier doux) et en munissant le doigt **48** d'un aimant, notamment un aimant en alliage de terre rare tel que néodyme-fer-bore.

Dans le cas d'une défaillance du système de commande de la position de l'équipage **24** mobile, un système mécanique est avantageusement prévu pour assurer le relais et déplacer, à l'arrivée du poste **1** de formage au point de chargement des préformes **3** et/ou de déchargement des récipients **2,** l'équipage **24** mobile de sa position basse vers sa position de sécurité.

Selon un mode préféré de réalisation illustré sur les figures 6 et 7, ce système mécanique est du type à came. Ainsi, la machine comprend un chemin **50** de came fixe (par rapport au poste **1** de formage), disposé localement (et non sur tout le trajet des postes **1** de formage) légèrement en amont du point de chargement / déchargement. L'équipage **24** mobile est quant à lui pourvu d'un suiveur **51** de came propre à coopérer avec le chemin **50** de came à l'arrivée du poste 1 de formage au niveau de celui-ci. Dans l'exemple illustré sur les figures, le suiveur **51** de came est monté sur le doigt **48** et s'étend en saillie par rapport à celui-ci. Le suiveur **51** de came se présente par exemple sous forme d'un galet monté en rotation sur un goujon **52** vissé latéralement dans le doigt **48.**

Lorsque le poste **1** de formage parvient au point de chargement / déchargement, et en cas de défaillance du système de commande du déplacement de l'équipage **24** mobile, le suiveur **51** de came vient au contact du chemin **50** de came dont il suit le profil au fur et à mesure de l'avancée du poste **1** de formage. Lorsque le suiveur **51** de came parvient au sommet du chemin **50** de came, le doigt **48** parvient au contact de la butée **47** à laquelle il demeure accolé par effet magnétique alors même que le suiveur **51** de came quitte le chemin **50** de came.

L'équipage **24** mobile étant ainsi placé et maintenu par effet magnétique dans sa position de sécurité, le déchargement des récipients **2** formés et le chargement des préformes **3** peut être effectué en toute sécurité et sans casse, le temps que la machine soit arrêtée en urgence pour permettre une intervention destinée à restaurer le fonctionnement normal du système de commande de déplacement de l'équipage **24** mobile (par ex. un accouplement débrayable à la tige **16** d'étirage).

Le système **46** de fixation magnétique étant destiné à assurer une fonction de secours, il ne doit pas nuire au fonctionnement normal de l'unité **13** d'injection. La position de sécurité de l'équipage **24** mobile étant intermédiaire entre sa position basse et sa position haute, l'équipage **24** mobile doit pouvoir atteindre la position haute sans que la butée **47** ne forme un obstacle.

A cet effet, la butée **47** est avantageusement montée coulissante par rapport au bloc **14** d'injection, à partir d'une position de fin de course basse (illustrée sur les figures 6 et 7) qui, lorsque le doigt **48** est au contact de la butée **47,** correspond à la position de sécurité de l'équipage **24** mobile. La butée **47** accompagne en revanche l'équipage **24** mobile lorsqu'il est déplacé au-delà de sa position de sécurité vers sa position haute.

Selon un mode de réalisation illustré sur les figures, la butée **47** se présente sous forme d'un coulisseau monté sur un ou plusieurs guides **53** (au nombre de deux dans l'exemple illustré) sous forme de tige(s), solidaire(s) du bloc **14** d'injection. Le ou chaque guide **53** est pourvu, à une extrémité inférieure, d'une tête **54** contre laquelle la butée **47** vient s'appliquer en position de fin de course, définissant ainsi la position de sécurité de l'équipage **24** mobile. On peut éventuellement régler verticalement la position de sécurité de l'équipage **24** mobile en réglant la position verticale du (des) guide(s) **53** par rapport au bloc **14** d'injection, ce qui règle la position de fin de course de la butée **47.** Selon un mode de réalisation, le (ou chaque) guide **53** présente une extrémité supérieure filetée par laquelle le guide **53** est vissé dans le bloc **14** d'injection, tandis que la tête **54** est munie d'une empreinte (par ex. cruciforme ou à six pans creux) permettant de visser ou dévisser le guide **53** pour régler sa position verticale.

Comme illustré sur la figure 3, l'unité **13** d'injection peut en outre être équipée d'un système **55** de stabilisation des préformes **3,** qui comporte un embout **56** monté en translation le long de l'axe X principal dans la tubulure **20** et apte à venir s'appuyer contre le col **5** de chaque préforme **3** en position basse de l'équipage **24** mobile. Dans l'exemple illustré, l'embout **56** est emmanché sur un guide **57** cylindrique monté coulissant dans la tubulure **20** dans le prolongement du conduit **15** fluidique. L'embout **56** et le guide **57** sont creux pour permettre la canalisation du fluide injecté dans la préforme **3** depuis le conduit **15** et pour permettre également le coulissement de la tige **16** d'étirage. L'embout **56** est monté coulissant par rapport à la tubulure **20** entre une position rétractée, illustrée sur la figure 3, dans laquelle l'embout **56** est écarté de la douille **31** et en appui contre le col **5** d'une préforme **3,** et une position déployée, illustrée sur la figure 5, dans laquelle l'embout **56** est en appui contre la douille **31,** de préférence via une rondelle **58.** Comme on le voit bien sur la figure 3, un ressort **59** de rappel fonctionnant en compression, interposé entre le bloc **14** d'injection (et plus précisément l'embout **19** de raccordement) et le guide **57,** sollicite l'embout **56** vers sa position déployée pour assurer la permanence du contact entre l'embout **56** et le col **5** de la préforme **3** et l'amortissement des éventuels rebonds de celle-ci lors de son introduction dans le moule **8.**

## Revendications

1. Unité **(13)** d'injection pour une machine de fabrication de récipients **(2)** par soufflage ou étirage soufflage, dans un moule **(8)** à l'empreinte des récipients **(2),** à partir d'ébauches **(3)** en matière plastique, cette unité **(13)** d'injection comprenant :
- un bloc **(14)** d'injection définissant un conduit **(15)** fluidique et pourvu d'au moins un orifice **(18)** d'alimentation en fluide en communication avec le conduit **(15)** fluidique ;
- un équipage **(24)** mobile muni d'une tuyère-cloche **(25)** en communication fluidique avec le conduit **(15),** l'équipage **(24)** mobile étant monté coulissant, par rapport au bloc **(14)** d'injection, entre une position basse dans laquelle la tuyère-cloche **(25)** est appliquée de manière étanche contre le moule **(8)** pour assurer l'étanchéité fluidique entre le conduit **(15)** fluidique et le moule **(8),** et une position de sécurité dans laquelle la tuyère-cloche **(25)** est écartée du moule **(8)** pour permettre l'évacuation d'un récipient **(2)** du moule et l'introduction d'une ébauche **(3)** dans le moule **(8)** ;
- un système **(46)** de fixation magnétique de l'équipage **(24)** mobile au bloc **(14)** d'injection, propre à retenir l'équipage **(24)** mobile en position de sécurité, sous le poids de celui-ci, ce système (46) de fixation magnétique comprenant une butée (47) montée sur le bloc (14) d'injection, et un doigt (48) solidaire de l'équipage (24) mobile et qui, en position de sécurité, vient au contact de la butée (47);
l'unité **(13)** d'injection étant **caractérisée en ce que** l'équipage **(24)** mobile comprend un suiveur **(51)** de came propre à coopérer avec un chemin **(50)** de came fixe.

2. Unité **(13)** d'injection selon la revendication 1, **caractérisée en ce que** la butée **(47)** intègre un aimant **(49).**

3. Unité **(13)** d'injection selon la revendication 1 ou la revendication 2, **caractérisée en ce que** le doigt **(48)** est réalisé dans un matériau ferromagnétique.

4. Unité **(13)** d'injection selon l'une des revendications 1 à 3, **caractérisée en ce que** la butée **(47)** est montée coulissante par rapport au bloc **(14)** d'injection, à partir d'une position de fin de course basse qui, lorsque le doigt **(48)** est au contact de la butée **(47),** correspond à la position de sécurité de l'équipage **(24)** mobile.

5. Unité **(13)** d'injection selon l'une des revendications 1 à 4, **caractérisée en ce que** le suiveur **(51)** de came est monté sur le doigt **(48).**

6. Unité **(13)** d'injection selon l'une des revendications 1 à 5, **caractérisée en ce que** le bloc **(14)** d'injection est pourvu d'un alésage **(22),** et **en ce que** l'équipage **(24)** mobile comprend une tige **(38)** solidaire de la tuyère-cloche **(25)** et montée de manière coulissante dans l'alésage **(22)** pour assurer, conjointement avec la tuyère-cloche **(25),** le guidage en translation de l'équipage **(24)** mobile par rapport au bloc **(14)** d'injection.

7. Unité **(13)** d'injection selon les revendications 1 et 6, prises en combinaison, **caractérisée en ce que** le doigt **(48)** est fixé à une extrémité **(39)** inférieure de la tige **(38).**

8. Poste **(1)** de formage de récipients **(2)** à partir d'ébauches **(3)** en matière plastique, qui comprend un moule **(8)** à l'empreinte des récipients **(2)** et une unité **(13)** d'injection selon l'une des revendications précédentes, surplombant le moule **(8).**

9. Machine de fabrication de récipients à partir d'ébauches en matière plastique, équipée d'une pluralité de postes **(1)** de formage selon la revendication 8.

## Patentansprüche

1. Einspritzeinheit (13) für eine Maschine zur Herstellung von Behältern (2) durch Blasen oder Streckblasen in einer Form (8) mit dem Abdruck der Behälter (2) auf Grundlage von Rohlingen (3) aus Kunststoff, diese Einspritzeinheit (13) umfassend:
- einen Einspritzblock (14), der eine Fluidleitung (15) definiert und mit mindestens einer Öffnung (18) zur Versorgung mit Fluid in Verbindung mit der Fluidleitung (15) versehen ist;
- eine bewegliche Ausrüstung (24), die mit einer Glockendüse (25) versehen ist, die mit der Leitung (15) in Fluidverbindung steht, wobei die bewegliche Ausrüstung (24) bezogen auf den Einspritzblock (14) zwischen einer unteren Position, in der die Glockendüse (25) abdichtend gegen die Form (8) gedrückt wird, um die Fluiddichtheit zwischen der Fluidleitung (15) und der Form (8) sicherzustellen, und einer Sicherheitsposition, in der die Glockendüse (25) von der Form (8) entfernt ist, um das Entfernen eines Behälters (2) aus der Form und das Einführen eines Rohlings (3) in die Form (8) zu erlauben, verschiebbar angebracht ist;
- ein System (46) zur magnetischen Befestigung der beweglichen Ausrüstung (24) an dem Einspritzblock (14), das geeignet ist, die bewegliche Ausrüstung (24) unter dem Gewicht derselben in der Sicherheitsposition zu halten, wobei dieses System (46) zur magnetischen Befestigung einen Anschlag (47), der auf dem Einspritzblock (14) angebracht ist, und einen Finger (48), der mit der beweglichen Ausrüstung (24) fest verbunden ist, und der in der Sicherheitsposition mit dem Anschlag (47) in Kontakt tritt, umfasst;
wobei die Einspritzeinheit (13) **dadurch gekennzeichnet ist, dass** die bewegliche Ausrüstung (24) einen Nockenfolger (51) umfasst, der geeignet ist, mit einer festen Nockenbahn (50) zusammenzuwirken.

2. Einspritzeinheit (13) nach Anspruch 1, **dadurch gekennzeichnet, dass** der Anschlag (47) einen Magneten (49) integriert.

3. Einspritzeinheit (13) nach Anspruch 1 oder 2, **dadurch gekennzeichnet, dass** der Finger (48) in einem ferromagnetischen Material ausgebildet ist.

4. Einspritzeinheit (13) nach einem der Ansprüche 1 bis 3, **dadurch gekennzeichnet, dass** der Anschlag (47) bezogen auf den Einspritzblock (14) ausgehend von einer unteren Endposition, die, wenn der Finger (48) mit dem Anschlag (47) in Kontakt steht, der Sicherheitsposition der beweglichen Ausrüstung (24) entspricht, verschiebbar angebracht ist.

5. Einspritzeinheit (13) nach einem der Ansprüche 1 bis 4, **dadurch gekennzeichnet, dass** der Nockenfolger (51) auf dem Finger (48) angebracht ist.

6. Einspritzeinheit (13) nach einem der Ansprüche 1 bis 5, **dadurch gekennzeichnet, dass** der Einspritzblock (14) mit einer Bohrung (22) versehen ist, und dadurch, dass die bewegliche Ausrüstung (24) eine Stange (38) umfasst, die mit der Glockendüse (25) fest verbunden ist und in der Bohrung (22) verschiebbar gelagert ist, um zusammen mit der Glockendüse (25) die Translationsführung der beweglichen Ausrüstung (24) bezogen auf den Einspritzblock (14) sicherzustellen.

7. Einspritzeinheit (13) nach den Ansprüchen 1 und 6 zusammengenommen, **dadurch gekennzeichnet, dass** der Finger (48) an einem unteren Ende (39) der Stange (38) befestigt ist.

8. Station (1) zur Formung von Behältern (2) auf Grundlage von Rohlingen (3) aus Kunststoff, die eine Form (8) mit dem Abdruck der Behälter (2) und eine Einspritzeinheit (13) nach einem der vorhergehenden Ansprüche umfasst, die die Form (8) überragt.

9. Maschine zur Herstellung von Behältern auf Grundlage von Rohlingen aus Kunststoff, die mit einer Mehrzahl von Stationen (1) zur Formung nach Anspruch 8 ausgerüstet ist.

## Claims

1. Injection unit (13) for a machine for manufacturing containers (2) by blow-moulding or stretch-blow-moulding, in a mould (8) having the impression of the containers (2), from preforms (3) made of plastics material, this injection unit (13) comprising:
- an injection block (14) that defines a fluidic duct (15) and is provided with at least one fluid feed orifice (18) in communication with the fluidic duct (15) ;
- a mobile assembly (24) provided with a bell nozzle (25) fluidically connected to the duct (15), the mobile assembly (24) being mounted so as to slide, with respect to the injection block (14), between a bottom position, in which the bell nozzle (25) is applied in a leaktight manner to the mould (8) in order to ensure fluidic leaktightness between the fluidic duct (15) and the mould (8), and a safety position, in which the bell nozzle (25) is spaced apart from the mould (8) in order to allow the evacuation of a container (2) from the mould and the introduction of a preform (3) into the mould (8);
- a system (46) for magnetically securing the mobile assembly (24) to the injection block (14), suitable for keeping the mobile assembly (24) in the safety position, under the weight thereof, this magnetic securing system (46) comprising a stop (47) mounted on the injection block (14), and a finger (48) secured to the mobile assembly (24), said finger (48), in the safety position, coming into contact with the stop (47);
the injection unit (13) being **characterized in that** the mobile assembly (24) comprises a cam follower (51) suitable for cooperating with a fixed cam track (50).

2. Injection unit (13) according to Claim 1, **characterized in that** the stop (47) incorporates a magnet (49) .

3. Injection unit (13) according to Claim 1 or Claim 2, **characterized in that** the finger (48) is made from a ferromagnetic material.

4. Injection unit (13) according to one of Claims 1 to 3, **characterized in that** the stop (47) is mounted so as to slide with respect to the injection block (14) from a bottom end-of-travel position which, when the finger (48) is in contact with the stop (47), corresponds to the safety position of the mobile assembly (24).

5. Injection unit (13) according to one of Claims 1 to 4, **characterized in that** the cam follower (51) is mounted on the finger (48).

6. Injection unit (13) according to one of Claims 1 to 5, **characterized in that** the injection block (14) is provided with a bore (22), and **in that** the mobile assembly (24) comprises a rod (38) secured to the bell nozzle (25) and mounted so as to slide in the bore (22) in order, together with the bell nozzle (25), to ensure that the mobile assembly (24) is guided in translation with respect to the injection block (14).

7. Injection unit (13) according to Claims 1 and 6, taken in combination, **characterized in that** the finger (48) is fixed to a lower end (39) of the rod (38).

8. Station (1) for forming containers (2) from preforms (3) made of plastics material, which comprises a mould (8) having the impression of the containers (2) and an injection unit (13) according to one of the preceding claims, overhanging the mould (8).

9. Machine for manufacturing containers from preforms made of plastics material, equipped with a plurality of forming stations (1) according to Claim 8.
